# EUROPEAN PATENT SPECIFICATION

(11) **EP 0 704 468 B1**
(45) Date of publication and mention of the grant of the patent: **10.04.2002**
(21) Application number: 95306838.4
(22) Date of filing: 27.09.1995
(51) Int. Cl.: C08G 18/40, C08G 18/63, C08G 18/65, C08G 18/72

(54) **High resilience polyurethane foam**
Hochelastische Polyurethanschaumstoffe
Mousses de polyuréthane à haute résilience

(30) Priority: 27.09.1994 GB 9419562
(43) Date of publication of application: 03.04.1996
(73) Proprietor: Bayer Aktiengesellschaft, 51368 Leverkusen (DE)
(72) Inventor: Motte, Philippe, F-60680 Jonquieres (FR); Gaillard, Michel, F-60280 Margny Les Compiegnes (FR)
(74) Representative: Colmer, Stephen Gary

(56) References cited:
- EP-A- 0 597 281
- US-A- 4 167 612

## Description

The present invention relates to polyurethane foams. More particularly, it relates to high resilience (HR) polyurethane foams.

The physical properties, such as hardness, load bearing, durability and strength coupled with subjective properties such as comfort and an acceptable surface texture (feel), of high density (i.e. from about 60 Kgm⁻³ to about 100 Kgm⁻³) latex foam make it suitable for use in many applications, particularly for cushioning and bedding applications and it has become the preferred foam in these fields and the standard against which other foams are judged.

Some of the more important properties are summarized for soft top pad and medium hardness full mattress latex foams in Table 1.

**Table 1**

| | **Top pad** | | **Full mattress** | **Standard** |
|---|---|---|---|---|
| Density, kg/m³ | 60 | | 66 | |
| ILD 25 %, N | 66 | | 111 | ISO 2349 |
| ILD 40 %, N | 91 | | 140 | |
| ILD 65 %, N | 191 | | 307 | |
| Tear resistance, (Cissoide)N/cm | 3.3 | | 4.0 | DIN 53515 |
| Tear resistance, (Pantalon) N/cm | 1.1 | | 1.5 | NFT 56109 |
| Sag factor (ILD) | 2.89 | | 2.76 | ISO 2349 |
| Hysteresis (%) | 28 | | 20 | NFT 5611 |
| **Static Fatigue** | | | | |
| CLD 40 %, kPa | 1.93 | | 3.50 | NFT 56110 |
| Return, kPa | 1.38 | | 2.95 | NFT 56110 |
| Recovery, % | 72 | | 81 | |
| Compression set 90%, % | 10 | | 6.4 | NFT 56112 |
| Wet comp set 70 %, 40°C, 95%, RH, % | 8 | | 5.2 | NFT 56112 |
| **Dynamic Fatigue** | | | | |
| Height loss, % | 0.7 | | 0.4 | ISO 3385 |
| Hardness, % | 19 | | 13 | ISO 3385 |

Although comfort is a subjective quality, hysteresis loss and sag factor (ILD 65%/ILD 25%) values, for example can be used to provide a measure of it. Static fatigue, which is an approach to establish a correlation between accelerated ageing and full scale service life conditions, is measured by compression tests under dry and humid conditions. Dynamic fatigue properties are also related to the relationship between accelerated ageing and full scale service life conditions but they take into account the propensity of a foam mattress to soften during extensive use. Static and Dynamic fatigue properties give an indication of Durability.

The surface texture (feel) of latex foams may be measured in accordance with test procedure ISO 4287/1 and involves a two-dimensional measurement of the surface by recording the trace of a pick up or stylus which is drawn across the surface by a suitable drive unit. By evaluating the trace obtained from drawing the stylus over a predetermined length of the surface, values can be obtained for the following:
The roughness profile (R) which represents all profile deviations from the mean line which is the line which represents the overall waviness and form of the trace and is the line which cuts the profile of the trace such that the profile areas above and below the line are equal;
The average roughness depth (RZ) which is the mean of the peak-to-valley values from five successive sample lengths (the total of the five successive sample lengths is referred to as lₘ);
The average roughness (RA) which is the arithmetic mean of all values of the roughness profile R within the length lₘ;
The maximum roughness depth (RT) which is the greatest perpendicular distance between the highest peak and the lowest valley within the measuring length lₘ; and
The maximum roughness depth (Rₘₐₓ) which is the largest of the five peak to valley values within the measuring length lₘ.

Typical values for the top pad latex, using a Perthometer S8P instrument, are

| | Rough face | Smooth face |
|---|---|---|
| RZ | 62.3 µm | 42.7 µm |
| RA | 11.5 µm | 9.2 µm |
| RT | 117 µm | 65.7 µm |
| Rₘₐₓ | 82.6 µm | 65.7 µm. |

Other latex products will give higher values, e.g. (for the rough face) up to 140 or perhaps slightly more for RZ, up to 30 or perhaps slightly more for RA, as high as 250 for RT and as high as 230 for Rₘₐₓ.

The most indicative value is considered to be that for RA and the next most indicative value the combination of RA and RZ.

It is desirable to produce a polyurethane foam which can replace latex foam since polyurethane foams have higher inherent combustion resistant properties than latex foams and they may be recycled, and many attempts have been made. However, typical values of RA and RZ for the surface texture of conventional high density high resilience polyurethane foams as measured using a Perthometer S8P machine are, RA=40 µm and RZ=190 µm, which are significantly above the general range of values for latex foams.

One example of an attempt to produce a latex-like high resilience polyurethane foam is based on the use of high molecular weight reactive triols, i.e. triols having a molecular weight of approximately 6000, and modified toluene diisocyanates (TDIs). Although these foams go some way towards achieving the physical properties of latex they still retain the rough feel of high resilience foams and are therefore less acceptable in the art. In addition, because of the relatively high isocyanate index formulations which are employed to avoid a deterioration in tear strength and wet compression set performances, the foams have medium to high hardness values.

Further attempts to manufacture foams comparable to latex have been made using viscous methylene di(phenyl isocyanate) prepolymers. However these foams suffer from certain drawbacks and disadvantages. As in the foams mentioned in the previous paragraph, these foams do not feel like latex and have poor tear strength properties. In addition, the use of the viscous isocyanate prepolymers necessitates the use of specialised equipment which increases the cost of the foam product. Further, an unpleasant odour may be given off from the foam product which is caused by both the catalyst used in the reaction process and the methylene di(phenyl isocyanate) prepolymer containing compounds.

The object of the present invention is to produce a high resilience polyurethane foam which has a surface texture, comparable to those of latex without requiring the use of specialised equipment and physical properties which approach or are comparable to those of latex.

We have discovered that this obj ect may be achieved by combining a new polyol blend with a modified toluene diisocyanate.

According to a first aspect of the present invention there is provided a polyol blend for use in the production of a high resilience polyurethane foam, comprising:
a reactive polymer polyol of the kind used in high resilience polyurethane foam and wherein the polyol component of the polymer polyol has an average molecular weight of at least 7000;
a polyol of the kind used in conventional polyurethane foam and wherein not more than 3% of its hydroxyl groups are primary hydroxyl groups; and
a diol as a chain extender.

In accordance with a second aspect, there is provided a composition comprising the aforementioned polyol blend and a silicone surfactant of the kind used in conventional polyurethane foams.

The present invention also provides a high resilience polyurethane foam obtained by reacting the aforementioned polyol blend with a modified toluene diisocyanate in the presence of a silicone surfactant of the kind used in high resilience polyurethane foam. A high resilience foam can be distinguished from a conventional foam *inter alia* by an ILD 65%/ILD 25% ratio, in accordance with ISO 2349 which is greater than or equal to 2.5.

By means of the invention, high resilience polyurethane foams are obtainable for the first time with a surface texture comparable to that of latex foam, and in particular an RA value (as defined above) below 35 µm, and even below 30 or 25 µm and an RZ value (as defined above) below 150 µm and even below 100 µm. RT values below 200 µm and even below 150 µm or 125 µm and Rₘₐₓ values below 200 µm and even below 150 µm or 125 µm are also obtainable.

By conventional polyurethane foam, we mean a polyurethane foam which is not a high resilience foam. Specifically, the conventional polyurethane foam will have an ILD 65%/ILD 25% of less than 2.5.

### The Polymer Polyol

By the term "polymer polyol" or "polymer polyol composition" as employed throughout the specification and appended claims, is meant a stable dispersion of a solid polymer phase within the liquid polyol, polyol blend or polyol containing blend, wherein the solid polymer is formed by *in situ* polymerization of low molecular weight compounds within the liquid phase. Preferably, the polymer is formed by polymerization or copolymerization of one or more ethylenically unsaturated monomers.

The polyol component of polymer polyols used for the production of high resilience polyurethane foams is normally selected from reactive polyols having medium functionality and a medium molecular weight. By medium functionality, we mean a true functionality of 2.2 to 2.5 or a theoretical functionality of 3.0.

By medium molecular weight, we mean an average molecular weight of at least 3,000. The preferred range is 4,500 to 6,500.

Recent developments in the polyurethane field have led to the use of reactive polyols in the production of high resilience polyurethane foams having high functionality and high molecular weight.

By high functionality, we mean a true functionality of at least 3.0 and a theoretical functionality of up to about 6.

By high molecular weight, we mean an average molecular weight of at least 7,000 with a preferred range of from 9,000 to 12,000.

The polyol of the polymer polyol component of the present invention will generally have a theoretical functionality of 3.0 or more, generally 3 to 6 and an average molecular weight of up to 12,000.

By a reactive polyol we mean a polyol having at least 50%, preferably at least 70%, more preferably at least 80%, primary hydroxyl groups.

In one preferred embodiment, the polyol component of the polymer polyol comprises a mixture of a high functionality polyol (hereafter referred to as the "first component") and polyalkylene oxide (hereinafter called the "second component") high in polyoxyethylene content. The high functionality polyol is preferably present in the polymer polyol in an amount of from 30 to 90% of the total composition and is a polyalkylene oxide polyol or blend of such polyols having an average functionality such that the combination thereof with the subsidiary polyol will have a true functionality of 3 or more, preferably 3.2 to 6. In a preferred embodiment the first component is a blend of a high primary hydroxyl poly(oxyethylene) end-capped poly(oxypropylene) polyol and a predominantly secondary hydroxyl polyalkylene oxide polyol to provide at least 50% more preferably at least 70% primary hydroxyl groups.

In practice the high functionality polyol can be a polyalkylene oxide polyol or a blend of such polyols of average nominal functionality between about 3 and about 6; having an ethylene oxide content between about 8% and about 25%; and an equivalent weight between about 1000 and about 3000, preferably from about 1600 to about 2200. The high functionality polyol can be employed at levels ranging from about 30% to about 90%, and preferably from about 40% to about 90%, based on the weight of the total blend.

The subsidiary polyalkylene oxide, the second component of the polymer polyol composition, can have a molecular weight between about 450 and about 30,000; nominal functionality up to about 8; and ethylene oxide content between about 30 and 100%. The lower molecular weight (450 to 2000) liquids with ethylene oxide content greater than about 70% are preferred for ease of handling and optimum processing. The level of this second component can be varied from about 1% to about 20% by weight of the polymer polyol composition with 1% to about 10% as the preferred range.

The polymer is preferably a standard vinyl polymer or copolymer; but may also be a polyurea-type polymer or a condensation product of a polyfunctional low molecular weight glycol or glycol amine with a diisocyanate. This component is formed as a stable dispersion in one or more or the polyols by *in situ* polymerization of the monomers. The level of the stably dispersed polymer can vary between about 2% and about 50% by weight, with about 4% to about 30% being the preferred range.

The polyol composition utilized in the present invention can include a variety of compounds which can encompass, but is not limited to, the following:
(a) alkylene oxide adducts of polyhydroxyalkanes;
(b) alkylene oxide adducts of nonreducing sugars and sugar derivatives; and
(v) alkylene oxide adducts of polyphenols.

Illustrative alkylene oxide adducts of polyhydroxyalkanes include, among others, the alkylene oxide adducts of glycerine, 1,2,4-trihydroxybutane, 1,2,6-trihydroxyhexane, 1,1,1-trimethylolethane, 1,1,1-trimethylolpropane, pentaerythritol, polycaprolactone, xylitol, arabitol, sorbitol, mannitol and the like.

A further class of polyols which can be employed are the above-mentioned alkylene oxide adducts of the nonreducing sugars, wherein the alkylene oxides have from 2 to 4 carbon atoms. Among the nonreducing sugars and sugar derivatives contemplated are sucrose, alkyl glycosides such as methyl glucoside, ethyl glucoside and the like; glycol glycosides such as ethylene glycol glycoside, propylene glycol glycoside, glycerol glucoside, 1,2,6-hexanetriol glycoside, and the like, as well as the alkylene oxide adducts of the alkyl glycosides as set forth in U.S. Patent No. 3,073,788.

A still further useful class of polyols as indicated in (c) above, is the polyphenols, and preferably the alkylene oxide adducts thereof wherein the alkylene oxides have from 2 to 4 carbon atoms. Among the polyphenols which are contemplated are, for example, condensation products of phenol and formaldehyde, and novolac resins; condensation products of various phenolic compounds and acrolein, the simplest member of this class being 1,2,3-tris(hydroxyphenyl) propanes; condensation products of various phenolic compounds and glyoxal, gluteraldehyde, and other dialdehydes, the simplest members of this class being the 1,1,2,2-tretrakis(hydroxyphenol)ethanes, and the like.

The alkylene oxide adducts of phosphorus and polyphosphorus acids are another useful class of polyols. Ethylene oxide, 1,2-epoxypropane, the epoxybutanes, 2-chloro-1,2-epoxypropane, and the like are preferred alkylene oxides. Phosphoric acid, phosphorous acid, the polymetaphosphoric acids, and the like are desirable for use in this connection.

Indeed, any material having an active hydrogen as determined by the Zerewitinoff test may be utilized as a component of the polyol. For example, amine-terminated polyether polyols are known and may be utilized, if desired.

The most preferred polyols employed in this invention include the poly(oxypropylene-oxyethylene) glycols. Ethylene oxide, when used, can be incorporated in any fashion along the polymer chain. Stated another way, the ethylene oxide can be incorporated either in internal blocks, as terminal blocks, or may be randomly distributed along the polyol chain.

In addition to the aforementioned poly(alkylene oxide) components, the polyol composition may contain hydroxyl terminated polybutadiene. Also, addition of minor amounts of an alkenoic acid grafted polyalkylene oxide polyether may be employed to aid in reactivity control and cell opening.

The production of stably dispersed polymers within polyols to make polymer polyols is know in the art. The basic patents in the field are Stamberger U.S. Patent No. 3,383,351 and Re. No. 29,118 (reissue of U.S. Patent No. 3,304,273). Such compositions can be produced by polymerizing one or more ethylenically unsaturated monomers dissolved or dispersed in a polyol in the presence of a free radical catalyst to form a stable dispersion of polymer particles in the polyol. These polymer polyol compositions have the valuable property of imparting to polyurethane foams produced therefrom higher load-bearing properties than are provided by the corresponding unmodified polyols. Also included are the polyols like those taught in U.S. Patent Nos. 3,325,421 and 4,374,209.

A wide variety of monomers may be utilized in the preparation of the polymer polyol compositions in accordance with the invention. Numerous ethylenically unsaturated monomers are disclosed in the prior patents. Any of these monomers are suitable. Polyurea and polyurethane suspension polymers have also been utilized.

The selection of the monomer or monomers used will depend on considerations such as the relative costs of the monomers and the polyurethane product characteristics required for the intended application. To impart the desired load-bearing to the foams, the monomer or monomers used in preparing the polymer polyols should, of course, desirably be selected to provide a polymer which has a glass transition of at least slightly higher than room temperature. Exemplary monomers include styrene and its derivatives such as para-methylstyrene, acrylates, methacrylates such as methyl methacrylate, acrylonitrile and other nitrile derivatives such as methacrylonitrile, and the like. Vinylidene chloride may also be employed.

The preferred monomer mixtures used to make the polymer polyol compositions are mixtures of acrylonitrile and styrene or acrylonitrile, styrene and vinylidene chloride.

The monomer content will be typically selected to provide the desired solids content required for the anticipated end-use application. For typical HR foam formulations, solids content of up to about 50 weight percent are feasible and may be utilized.

For examples of suitable polymer polyols, reference may be made to US-A-5011908.

An example of a suitable polymer polyol for use as the first component in the polyol combination of the present invention is ULTRACEL 2000™. ULTRACEL 2000 is particularly preferred as the polymer polyol because its relatively high functionality means that foams may be produced with a high sag factor, i.e. ≥2.7 and good dry and wet compression characteristics at a low isocyanate index.

### The Polyol

The polyol of the kind used in conventional polyurethane foam and employed herein is a non-reactive polyol, i.e. a polyol having less than about 3% primary hydroxyl groups. The polyol preferably has an average molecular weight in the range of from 3500 to 6000 and a true functionality of 2.5 to 3.0. In general it is formed by alkoxylating a polyhydric alcohol with one or more alkylene oxides having 2 to 4 carbon atoms. Examples are ethylene oxide, propylene oxide and butylene-1,2-oxide. Mixtures of alkylene oxides may be used and preferred examples of the polyol are polyoxyalkylene polyols obtained from a mixture of propylene oxide and ethylene oxide with a random distribution of ethylene oxide units in the polyoxyalkylene chains. It will be understood, however, that at least about 97% of the terminal hydroxyl groups must be attached to secondary carbon atoms.

### The Chain Extender

The chain extender is preferably a low molecular weight aliphatic diol, preferably having a molecular weight not exceeding about 200 and more preferably not exceeding about 100. Examples of suitable compounds include 1,4-butanediol, methylpropanediol, 1,3-propanediol and ethanediol, with butanediol and methylpropanediol being particularly preferred.

### The Surfactant

The surfactant which may be combined with the polyol blend to form the composition of the invention is a silicone surfactant as used in the preparation of conventional polyurethane foams. These surfactants are not normally used in high resilience foams since they can result in the formation of closed cells and foam shrinkage. Silicone surfactants of the kind employed in conventional foams are well known to those skilled in the art and are generally polysiloxane - polyoxyalkylene copolymers which generally contain 100 or more repeating oxysilicon units. Examples of suitable surfactants include GOLDSCHMIDT B2370™ & B8002™.

The polymer polyol is employed primarily to provide the essential physical properties and will normally be present in the polyol blend of the invention in an amount of from 50 to 86, preferably 58 to 77 parts by weight. The polyol is employed to decrease foam hardness. The polyol will normally be present in an amount of from 10 to 46, preferably 19 to 38 parts by weight. The chain extender is employed to improve tear strength and will normally be present in an amount of 2 to 10 parts preferably 2 to 8 parts by weight. All parts are per 100 parts of polyol blend.

The silicone surfactant is employed to assist in the formation of the desired cell structure to achieve a latex-like feel. It will normally be present in the composition in an amount of from 0.04 to 0.20 part and preferably from 0.06 to 0.15 part per 100 parts of the polyol blend by weight.

The components of the composition may be combined in any convenient order and using conventional mixing apparatus. The composition is then reacted with the modified TDI. By modified TDI we mean a composition consisting mainly of toluene diisocyanate but containing a low proportion of polymerised TDI. The purpose of using modified TDI is to assist the formation of a fine open-cell structure of uniform cell size. It has been found that this is achieved in the foams of the present invention even at a relatively low isocyanate index value. In addition, the poor "green" strength properties, such as are normally associated with the use of standard TDIs, such as TDI T80 and TDI T65, in low index formulations, are not seen. In addition, the rate of polymerisation is generally faster than that observed in known systems. Thus, in manufacture, the resultant foam blocks are more readily handled. In particular, deterioration of the foam at the cutting station is diminished.

Suitable modified TDIs include those known as Scuranate BT (marketed by Rhone Poulenc) Desmodur MT58 (marketed by Bayer) and Tedimon 153 (marketed by Montedison).

The HR foams of the present invention are produced by reacting the polyol blend with the modified toluene diisocyanate in the presence of the silicone surfactant, a blowing agent and optionally, additives conventional in the art of HR polyurethane foam, e.g. catalysts, crosslinkers, e.g. diethanolamine, triethanolamine, sorbitol, glycerol and other low molecular weight poly-functional hydroxy and/or amine compounds; flame retardants and the like. It is also advantageous to employ a silicone surfactant of the kind normally used in the manufacture of HR foams. Such surfactants are well known to those skilled in the art and examples are polydimethyl siloxane oils and polysiloxane-polyoxyalkylene copolymers containing less than 50, and generally less than 20, oxysilicon units.

It is thus to be understood that two different silicone surfactants will normally be employed in the production of the foam, namely a silicone surfactant of the kind used in the production of conventional foams and a silicone surfactant of the kind used in the production of HR foams.

The blowing may be by any conventional blowing agent and the agent may be a compound which is readily vaporisable or a compound which may be thermally decomposed to produced a gas. However, the preferred blowing agent is water which is normally employed in an amount of from 1 to 5 parts per 100 parts of the polyol blend, more preferably 1.5 to 3.0 parts.

The ratio of polyol to isocyanate is preferably such as to provide an isocyanate index of 80 to 100, more preferably 85 to 95.

The foam may include fillers to improve or modify its properties. Suitable fillers include calcium carbonate, aluminum trihydrate and barium sulphate. In addition flame retardant fillers may be included. Suitable flame retardant fillers include melamine and graphite. The concentration of the filler is preferably from 0 to 40 parts per 100 parts of the total polyol in the polyol blend. Other flame retardants may also be included either as alternatives to the flame retardant fillers or in combination therewith.

It is an important feature of the invention that the formation of the foam may be carried out according to standard polyurethane foam manufacturing processes for the manufacture of slabstock and moulded foam without requiring modification of the machinery.

The foaming process by which the foams of the present invention may be obtained is faster than that required for latex foams and physical properties comparable with those of latex foams can be obtained at lower foam densities.

By means of the invention, soft, high quality, high density, high resilience polyurethane foams having densities in the range of from about 40 to 80 Kgm⁻³ and a surface texture (feel) which is comparable to that of latex are producible. Moreover, physical properties approaching or comparable to those of latex foams are achievable, and furthermore at densities which are up to 15% lower that those of latex foam.

Without wishing to be bound by any particular theory, we believe that the latex like feel of the foam of the present invention is due to the significantly higher proportion of cells within the foam which are smooth and regular rather than the preponderance of rough, irregular cells normally associated with high resilience polyurethane foams. In particular, many of the cells in the foams of the present inventional are substantially spheroidal. In any event, by means of the invention HR polyurethane foams are obtainable having an RA value, and a combination of RA and RZ values which approach or equal those of latex foams. Specifically, by means of the invention, HR polyurethane foams are obtainable having an RA value less than 35 µm or even 30 µm and an RZ value less than 150 µm or even 100 µm, measured according to ISO 4287/1 on a PERTHOMETER S8P machine.

The latex-like properties achieved in the foams of the present are surprising since it is known that the use of surfactants of the kind normally used for conventional foams in HR foam formulating generally results in foam shrinkage resulting from the formation of too many closed cells. Likewise, the use of modified TDI in an HR formulation normally tends to result in inadequate tear strength particularly at low isocyanate index. The effect of the non-reactive polyol is also unexpected because surprisingly it improves softness without negatively influencing dry set values while providing a fine cell structure.

The invention will now be described with reference to the following examples wherein

| | |
|---|---|
| Polyol A | is a polymer polyol with a solids content of about 10% and wherein the polyol component comprises a mixture of polyols with an average molecular weight Mn of about 9000, a theoretical functionality of about 5, a ratio of oxyethylene to oxypropylene units of about 16:84 and a primary hydroxyl content of about 80%. |
| | |
| Polyol B | is a non-reactive triol containing random oxyethylene and oxypropylene groups with about 14% ethylene oxide and an average molecular weight Mn of about 4000. |
| | |
| Polyol C | is a 100 average molecular weight aliphatic diol. |
| | |
| Polyol D | is a 6000 average molecular weight (Mn) reactive triol. |
| | |
| Polyol E | is a 4000 average molecular weight (Mn) reactive diol. |
| | |
| Surfactants | B2370 and B8002 are polysiloxane-modified polyethers marketed by Goldschmidt. |

### Example 1

A polyol blend of the following composition was produced:

| | |
|---|---|
| Polyol A | 67 parts |
| Polyol B | 29 parts |
| Polyol C | 4 parts |
| Surfactant B2370 | 0.15 parts |

This polyol blend was reacted with 37.1 parts of TDI Scuranate BT to form the polyurethane in the presence of 2.2 parts water, 0.15 part of Surfactant B4113, a polydimethyl siloxane oil marketed by Goldschmidt, 0.08 part of Niax A1, a tertiary amine catalyst marketed by Union Carbide and 0.35 part of Dabco 33LV, a heterocyclic tertiary amine catalyst marketed by Air Products. The product was allowed to produce block foam on a Laader Berg slabstock machine.

### Example 2

A polyol blend of the following composition was produced:

| | |
|---|---|
| Polyol A | 67 parts |
| Polyol B | 29 parts |
| Polyol C | 4 parts |
| Surfactant B8002 | 0.15 parts |

This polyol blend was reacted with 41.0 parts of TDI Scuranate BT to form the polyurethane in the presence of 1.9 parts water, 0.15 part of Surfactant B4113, 0.08 part of Niax A1, a tertiary amine catalyst and 0.35 part of Dabco 33LV, a heterocyclic tertiary amine catalyst and 2.5 parts of ARCOL 1280, a cell opener, marketed by ARCO Chemical Company. The product was allowed to produce block foam on a Laader Berg slabstock machine.

The physical properties of the foams produced in Examples 1 and 2 are set out in Table 2.

**Table 2**

| | Specification for latex foam | **Example 1** | **Example 2** | **Standard** |
|---|---|---|---|---|
| Density kgm³ | | 51.8 | 57.1 | |
| ILD 25 %, N | | 76 | 103 | |
| ILD 40 %, N | ≤140 | 101 | 134 | 150 2439 |
| ILD 65 %, N | | 216 | 286 | |
| Sag Factor (ILD) | ≥2.7 | 2.84 | 2.78 | |
| CLD at 25 % kPa | | 2.04 | 2.72 | |
| CLD at 40 % kPa | ≤3.5 | 2.57 | 3.30 | |
| CLD at 50 % kPa | | 3.29 | 4.17 | NFT 56110 |
| CLD at 65 % kPa | | 5.94 | 7.69 | |
| Return at 50 % kPa | | 2.64 | 3.50 | |
| Return at 40 % kPa | | 2.02 | 2.73 | |
| Hysteresis (%) | | 21 % | 17 % | |
| Sag Factor (CLD) | ≥2.8 | 2.91 | 2.83 | |
| Tensile Strength (kPa) | | 89 | 82 | NFT 56108 |
| Elongation (%) | | 112 | 94 | |
| Tear Resistance, | | | | DIN 53515 |
| Cissoide (N/cm) | | 3.20 | 3.17 | NFT 56109 |
| Tear Resistance | | | | |
| Pantalon (N/cm) | ≥ 1.1 | 1.65 | 1.5 | |
| Compression Set at 70%, 70°C, % | ≤10 | 6 | 4 | NFT 56112 |
| Compression Set at 90%, 70°C, % | ≤ 10 | 7 | 4 | |
| Wet Compression Set at 70%, 40°C, | ≤ 15 | 14 | 5 | |
| 95% RH, % | | | | |
| Surface texture RA (µm) | ≤35 | <35 | <35 | ISO 4287/1 |
| RZ (µm) | ≤150 | <150 | <150 | |

### Comparative Examples 1 - 5

Foams were produced from the compositions set out in Table 3. The physical properties of these foams are set in Table 4.

As can be seen from these Comparative Examples, if the polyol used in the production of the foam is not a blend of a polymer polyol of the kind used in high resilience polyurethane foam, a polyol of the kind used in conventional polyurethane foam and a chain extender, the physical properties of the foam are not acceptable for use in the bedding/ furnishing fields. Further, foams made from the compositions listed in Table 3 did not have a surface texture (feel) corresponding to that of latex. In Comparative Examples 1 to 4 the value for RA, as defined above, was greater than 35.

**Table 3**

| | **Comp Ex 1** | **Comp Ex 2** | **Comp Ex 3** | **Comp Ex 4** | **Comp Ex 5** |
|---|---|---|---|---|---|
| Polyol A | 100 | 70 | 80 | 94 | 70 |
| Polyol B | 0 | 0 | 0 | 0 | 30 |
| Polyol C | 0 | 0 | 0 | 6 | 0 |
| Polyol D | 0 | 30 | 0 | 0 | 0 |
| Polyol E | 0 | 0 | 20 | 0 | 0 |
| Water | 2.5 | 2.0 | 2.11 | 2.0 | 2.0 |
| Dabco 33LV | 0.40 | 0.45 | 0.40 | 0 | 0.45 |
| DEOA 100% | 0.20 | 0.17 | 0.24 | 0.17 | 0.38 |
| DMEA (amine catalyst) | 0 | 0 | 0 | 0.60 | 0 |
| DIPOA 80% | 2.00 | 0 | 0 | 0 | 0 |
| Glycerine | 1.00 | 0 | 1.00 | 0 | 1.00 |
| Surfactant B4113 | 0.15 | 0.15 | 0.15 | 0.15 | 0.15 |
| Surfactant B2370 | 0.10 | 0.10 | 0.07 | 0.10 | 0.10 |
| NIAX AI (Tertiaryamine catalyst) | 0.15 | 0.15 | 0.20 | 0.15 | 0.15 |
| Scuranate BT | 34.50 | 23.95 | 24.50 | 36.85 | 29.45 |
| Isocyanate index | 80 | 85 | 70 | 85 | 85 |

**Table 4**

| | **Specification for latex foam** | **Comp Ex 1** | **Comp Ex 2** | **Comp Ex 3** | **Comp Ex 4** | **Comp Ex 5** |
|---|---|---|---|---|---|---|
| Density | | 54.1 | 58.5 | 60.7 | 56.3 | 62.8 |
| ILD (N) at 25 % | | 129 | 96 | 73 | 113 | 93 |
| ILD (N) at 40 % | ≤ 140 | 176 | 134 | 100 | 154 | 130 |
| ILD (N) at 65 % | | 368 | 291 | 211 | 316 | 295 |
| ILD 40 %/Density | | 3.26 | 2.29 | 1.65 | 2.73 | 2.07 |
| Sag Factor (ILD) | ≥2.7 | 2.85 | 3.03 | 2.89 | 2.80 | 3.17 |
| CLD (kPa) at 25 % | | 3.77 | 2.40 | 2.05 | 3.05 | 2.32 |
| CLD (kPa) at 40 % | ≤3.5 | 6.96 | 3.35 | 2.74 | 3.90 | 3.30 |
| CLD (kPa) at 50 % | | 6.45 | | 3.60 | 4.95 | |
| CLD (kPa) at 65 % | | 11.73 | 7.27 | 6.74 | 8.50 | 7.50 |
| Return at 50 % | | 5.15 | | 2.95 | 4.05 | |
| Return at 40 % | - | 3.85 | 2.61 | 2.20 | 3.10 | 2.60 |
| CLD 40 %/Density | | 0.09 | 0.06 | 0.05 | 0.07 | 0.06 |
| Hysteresis CLD 40%, % | | 22 | 23 | 20 | 21 | 22 |
| Sag Factor (CLD) | | 3.11 | 3.03 | 3.29 | 2.79 | 3.23 |
| Tensile Strength (kPa) | | | | 49 | 91 | |
| Elongation (%) | | | | 94 | 115 | |
| Tear Cissoide (N/m) | ≥1.1 | 2.42 | 2.20 | 2.05 | 2.90 | 1.90 |
| Tear Pantalon (N/m) | | 0.63 | 0.90 | 0.80 | 1.60 | 0.80 |
| Compression Set at | | | | | | |
| 90% 70 °C % | ≤10 | 5.5 | 100 | 100 | 9 | 7 |
| Wet Compression | | | | | | |
| Set at 70% 40 °C % | ≤15 | 5.7 | 17 | 12 | 10 | 11 |
| RA, (µm) | ≤35 | 38.2 | 43.4 | 39.4 | 42.6 | 28.4 |
| RZ, (µm) | ≤ 150 | 173.4 | 201.7 | 181.6 | 197.2 | 121.3 |

It will be seen that all these Comparative Examples fail to meet at least one of the criteria for latex rubber and Comparative Examples 1 - 4 fail the two most indicative tests (RA and RZ) for surface texture.

### Example 3

From the formulation set out below, a moulded foam was formed on a Cannon machine using an epoxy resin mould, at a mould temperature of 35°C and with a demoulding time of 6 minutes.

| | |
|---|---|
| Polyol A | 67 parts |
| Polyol B | 29 parts |
| Polyol C | 4 parts |
| ARCOL 1280 | 3 parts |
| water | 2.3 parts |
| Dabco 33LV (heterocyclic tertiary amine catalyst) | 0.35 part |
| NIAX A1 (tertiary amine catalyst) | 0.08 part |
| Surfactant B4113 | 0.15 part |
| Surfactant B8002 | 0.08 part |
| Scuranate BT | 38.11 parts (isocyanate index = 90) |

ARCOL 1280 is a 4000 average molecular weight (Mn) with random oxyethylene and oxypropylene groups and containing about 75% ethylene oxide,

The properties of the foam are set out in Table 5 below

**Table 5**

| | | |
|---|---|---|
| Core Density (kg/m²) | 51.3 | |
| ILD(N) at 25% | 75 | |
| at 40% | 99 | ISO 2439 |
| at 65% | 216 | |
| Sag Factor (ILD) | 2.82 | |
| ILD 40%/ Density | 1.93 | |
| CLD (kPa) at 25% | 2.00 | |
| at 40% | 2.48 | |
| at 50% | 3.02 | NET 56110 |
| at 65% | 5.40 | |
| Return at 50% | 2.60 | |
| Return at 40% | 2.10 | |
| CLD 40%/Density | 0.048 | |
| Hysteresis CLD 40% | 15% | |
| Sag Factor (CLD) | 2.70 | |
| Tensile (kPa) | 83 | NET 56108 |
| Elongation (%) | 98 | |
| Tear Cissoide (N/cm) | 3.30 | DIN 53515 |
| Tear Pantalon (N/cm) | 1.35 | NFT 56109 |
| C. Set at 70% 70°C | 7 | NFT 56112 |
| C. Set at 90% 70°C | 7 | DIN 53572 |
| Humid C. Set at 70% 40°C | 10 | NFT 56112 |
| Surface texture | | |
| Smooth face RA (µm) | 8.3 | ISO 4287/1 |
| RZ (µm) | 41.7 | |
| RT (µm) | 79.2 | |
| Rₘₐₓ (µm) | 76.3 | |
| Rough face RA (µm) | 33.1 | |
| RZ (µm) | 141.3 | |
| RT (µm) | 201.0 | |
| Rₘₐₓ (µm) | 187.1 | |

### Examples 4 to 8 and Comparative Examples 6 and 7

Following the procedure of Example 1, foams were formed on a slabstock machine from the formulations set out below. Comparative Examples 6 and 7 are typical high density HR foam formulations. The formulations of these foams are set out in Table 6

**TABLE 6**

| | Comp. Ex 6 | Comp. Ex. 7 | Example 4 | Example 5 | Example 6 | Example 7 | Example 8 |
|---|---|---|---|---|---|---|---|
| Polyol A | 100 | 100 | 67 | 67 | 67 | 67 | 67 |
| Polyol B | 0 | 0 | 29 | 29 | 29 | 29 | 29 |
| Polyol C | 0 | 4 | 4 | 4 | 6 | 7 | 4 |
| Water | 1.80 | 1.60 | 2.40 | 1.95 | 1.95 | 1.93 | 1.40 |
| Dabco 33LV | 0.10 | 0.07 | 0.08 | 0.08 | 0.08 | 0.08 | 0.08 |
| Niax A1 | 0.05 | 0 | 0.25 | 0.35 | 0.35 | 0.35 | 0.30 |
| Surfactant 8002 | 0 | 0 | 0.08 | 0.08 | 0.08 | 0.08 | 0.05 |
| Surfactant SH 209 | 0 | 0 | 0.08 | 0 | 0.08 | 0.08 | 0 |
| Surfactant B4113 | 0 | 0 | 0 | 0 | 0 | 0 | 0.15 |
| Scuranate BT | 0 | 0 | 39.20 | 34.50 | 38.87 | 36.25 | 28.83 |
| ARCOL 1280 | 0 | 0 | 1.60 | 0 | 0 | 0 | 2.00 |
| T80/20 | 27.50 | 27.50 | 0 | 0 | 0 | 0 | 0 |
| KOSMOS 29 | 0.08 | 0.08 | 0 | 0 | 0 | 0 | 0 |
| Surfactant L2100 | 0.60 | 0.40 | 0 | 0 | 0 | 0 | 0 |
| Isocyanate Index | 95 | 95 | 90 | 90 | 90 | 80 | 90 |

KOSMOS 29 is stannous octoate from Goldschmidt and Surfactant L2100 is marketed by Union Carbide. The process details and the properties of the foams so obtained are set out in Table 7.

**Table 7**

| | Comp Ex 6 | Comp Ex 7 | Example 4 | Example 5 | Example 6 | Example 7 | Example 8 |
|---|---|---|---|---|---|---|---|
| Density (Kg/m³) | 54.8 | 55.8 | 48.3 | 56.0 | 62.2 | 68.8 | 78.7 |
| ILD (N) at 25 % | 90 | 94 | 63 | 81 | 101 | 61 | 109 |
| ILD (N) at 40 % | 120 | 127 | 84 | 107 | 139 | 85 | 144 |
| ILD (N) at 65 % | 254 | 264 | 191 | 228 | 299 | 176 | 306 |
| Sag Factor (ILD) | 2.82 | 2.80 | 3.01 | 2.81 | 2.96 | 2.89 | 2.81 |
| CLD (kPa) at 25 % | 2.25 | 2.48 | 1.75 | 2.12 | 2.45 | 1.75 | 2.75 |
| CLD (kPa) at 40 % | 2.95 | 3.10 | 2.20 | 2.64 | 3.19 | 2.20 | 3.47 |
| CLD (kPa) at 65 % | 7.10 | 7.02 | 5.10 | 6.33 | 8.27 | 5.10 | 8.05 |
| Return at 40% | 2.40 | 2.47 | 1.75 | 2.13 | 2.51 | 1.70 | 2.98 |
| Hysteresis CLD 40 % | 21 | 22 | 20 | 19 | 21 | 23 | 14 |
| Tensile Strength (kPa) | 74 | 94 | 100 | 91 | 117 | 98 | 82 |
| Elongation (%) | 107 | 141 | 122 | 144 | 130 | 130 | 111 |
| Tear Cissoide (N/m) | 3.40 | 4.94 | 3.10 | 3.49 | 4.39 | 3.20 | 3.18 |
| Tear Pantalon (N/m) | 1.60 | 2.59 | 1.50 | 1.67 | 2.31 | 1.75 | 1.67 |
| C. Set at 70 % 70°C % | 6 | 6 | 8 | 4 | 6 | 5 | 3 |
| C. Set at 90 % 70°C % | 9 | 7 | 9 | 6 | 6 | 6 | 5 |
| Humid C. Set at 70%, 95% RH, 40 °C, % | 10 | 12 | 11 | 9 | 11 | 5 | 4 |
| Surface texture RA (µm) | 41.7 | 40.1 | 30.1 | 32.3 | 26.1 | 22.2 | 19.5 |
| RZ (µm) | 194.3 | 191.4 | 112.7 | 115.8 | 104.6 | 98.1 | 76.4 |
| RT (µm) | 260.1 | 257.1 | 139.3 | 137.2 | 130.1 | 124.0 | 109.3 |
| Rₘₐₓ (µm) | 244.6 | 248.8 | 131.4 | 130.6 | 124.2 | 115.2 | 103.9 |

The values for ILD (N) at 40% for Example 8 is above the required standard but within experimental error.

## Claims

1. A polyol blend for use in the production of a high resilience polyurethane foam, comprising:
a reactive polymer polyol of the kind used in high resilience polyurethane foam and wherein the polyol component of the polymer polyol has an average molecular weight of at least 7000;
a polyol of the kind used in conventional polyurethane foam and wherein not more than 3% of its hydroxyl groups are primary hydroxyl groups; and
a diol as a chain extender.

2. A polyol blend according to Claim 1, wherein the polymer polyol of the kind used in high resistance polyurethane foam is a reactive polymer polyol having a true functionality of at least three.

3. A polyol blend according to Claim 2, wherein at least 70% of the hydroxyl groups of the polyol of the polymer polyol are primary.

4. A polyol blend as claimed in any one of Claims 1 to 3, wherein the polyol has an average molecular weight in the range 3500 to 6000 and a true functionality of 2.5 to 3.0.

5. A polyol blend as claimed in any one of Claims 1 to 4 wherein the chain extender is an aliphatic diol having a molecular weight not exceeding 200.

6. A polyol blend according to Claim 5, wherein the aliphatic diol is selected from 1,4-butanediol, methylpropanediol, 1,3-propanediol or ethanediol.

7. A polyol blend as claimed in any one of Claims 1 to 6, wherein the polymer polyol is present in an amount of from 58 to 77 parts by weight, the polyol is present in an amount of from 19 to 38 parts by weight and the chain extender is present in an amount of from 2 to 8 parts by weight, each per 100 parts of polyol blend.

8. A composition comprising a polyol blend as claimed in any one of Claims 1 to 8 and a silicone surfactant of the kind employed in the production of conventional polyurethane foams.

9. A composition according to Claim 8, wherein the surfactant is present in an amount of from 0.06 to 0.15 parts by weight per 100 parts of the polyol blend.

10. A high resilience polyurethane foam comprising the reaction product of a composition as claimed in Claim 8 or Claim 9 and a modified toluene diisocyanate.

11. A high resilience polyurethane foam as claimed in claim 10 in which the foam-forming mixture further includes a silicone surfactant of the kind used for the production of high resilience foams.

12. A high resilience polyurethane foam preparable by reacting the polyol blend of any of claims 1 to 8 with a modified toluene diisocyanate, said high resilience polyurethane foam having an RA value in accordance with ISO 4287/1 of less than 35 µm measured using a PERTHOMETER S8P machine.

13. A high resilience polyurethane foam according to claim 12 having an RA value and an RZ value in accordance with ISO 4287/1 of less than 35 µm and less than 150 µm, respectively, measured using a PERTHOMETER S8P machine.

## Patentansprüche

1. Polyol-Mischung, die verwendet wird, um einen Polyurethanschaum mit hoher Rückfederung herzustellen, umfassend:
ein reaktives Polymerpolyol der Art, die bei einem Polyurethanschaum mit hoher Rückfederung verwendet wird, und worin die Polyol-Komponente des Polymerpolyols ein Massenmittel der Molmasse von wenigstens 7000 aufweist;
ein Polyol der Art, die bei konventionellem Polyurethanschaum verwendet wird, und worin nicht mehr als 3 % der Hydroxylgruppen desselben primäre Hydroxylgruppen sind; und
ein Diol als Kettenverlängerer.

2. Pohlyol-Mischung gemäß Anspruch 1, worin das Polymerpolyol der Art, die bei einem Polyurethanschaum mit hoher Rückfederung verwendet wird, ein reaktives Polymerpolyol ist, das eine wahre Funktionalität von wenigstens drei hat.

3. Polyol-Mischung gemäß Anspruch 2, worin wenigstsens 70 % der Hydroxylgruppen des Polyols des Polymerpolyols primäre Hydroxylgruppen sind.

4. Polyol-Mischung gemäß irgendeinem der Ansprüche 1 bis 3, worin das Polyol ein Massenmittel der Molmasse im Bereich von 3500 bis 6000 und eine wahre Funktionalität von 2,5 bis 3,0 aufweist.

5. Polyol-Mischung gemäß irgendeinem der Ansprüche 1 bis 4, worin der Kettenverlängerer ein aliphatisches Diol einer Molmasse von nicht mehr als 200 ist.

6. Polyol-Mischung gemäß Anspruch 5, worin das aliphatische Diol aus 1,4-Butandiol, Methylpropandiol, 1,3-Propandiol oder Ethandiol ausgewählt ist.

7. Polyol-Mischung gemäß irgendeinem der Ansprüche 1 bis 6, worin das Polymerpolyol in einer Menge von 58 bis 77 Gewichtsteilen vorliegt, das Polyol in einer Menge von 19 bis 38 Gewichtsteilen vorliegt, und der Kettenverlängerer in einer Menge von 2 bis 8 Gewichtsteilen vorliegt, und zwar jeweils pro 100 Teile der Polyol-Mischung.

8. Zusammensetzung, umfassend eine Polyol-Mischung gemäß irgendeinem der Ansprüche 1 bis 8 und ein Silicontensid der Art, die bei der Herstellung herkömmlicher Polyurethanschäume verwendet wird.

9. Zusammensetzung gemäß Anspruch 8, worin das Tensid in einer Menge von 0,06 bis 0,15 Gewichtsteilen pro 100 Teile der Polyol-Mischung vorliegt.

10. Polyurethanschaum mit hoher Rückfederung, umfassend das Reaktionsprodukt einer Zusammensetzung gemäß Anspruch 8 oder Anspruch 9 und ein modifiziertes Toluoldiisocyanat.

11. Polyurethanschaum mit hoher Rückfederung gemäß Anspruch 10, worin die schaumbildende Mischung weiterhin ein Silicontensid der Art einschließt, die bei der Herstellung von Polyurethanschäumen mit hoher Rückfederung verwendet wird.

12. Polyurethanschaum mit hoher Rückfederung, der durch die Umsetzung der Polyol-Mischung gemäß irgendeinem der Ansprüche 1 bis 8 mit einem modifizierten Toluoldiisocyanat hergestellt werden kann, wobei der Polyurethanschaum mit hoher Rückfederung einen RA-Wert, der unter Verwendung einer PERTHOMETER S8P-Maschine gemessen wurde, in Übereinstimmung mit ISO 4287/1 von weniger als 35 µm aufweist.

13. Polyurethanschaum mit hoher Rückfederung gemäß Anspruch 12 mit einem RA-Wert und einem RZ-Wert, die unter Verwendung einer PERTHOMETER S8P-Maschine gemessen wurden, in Übereinstimmung mit ISO 4287/1 von weniger als 35 µm bzw. weniger als 150 µm aufweist.

## Revendications

1. Mélange de polyols pour l'utilisation dans la production de mousse polyuréthane à haute résilience, comprenant :
un polymère polyol réactif du type de ceux utilisés pour la mousse de polyuréthane haute résilience et dans lequel le composant polyol du polymère polyol a un poids moléculaire moyen d'au moins 7000;
un polyol du type de ceux utilisés dans la mousse de polyuréthane classique et dans lequel pas plus de 3% de ses groupes hydroxyles sont des groupes hydroxyles primaires; et
un diol comme prolongateur de chaîne

2. Mélange de polyols selon la revendication 1, dans lequel le polymère polyol du type de ceux utilisés dans la mousse de polyuréthane à haute résistance est un polymère polyol réactif ayant une fonctionnalité réelle d'au moins trois.

3. Mélange de polyols selon la revendication 2, dans lequel au moins 70% des groupes hydroxyles du polyol du polymère polyol sont primaires.

4. Mélange de polyols selon l'une quelconque des revendications 1 à 3, dans lequel le polyol a un poids moléculaire moyen dans l'intervalle allant de 3500 à 6000 et une fonctionnalité réelle de 2,5 à 3,0.

5. Mélange de polyols selon l'une quelconque des revendications 1 à 4, dans lequel le prolongateur de chaîne est un diol aliphatique ayant un poids moléculaire n'excédant pas 200.

6. Mélange de polyols selon la revendication 5, dans lequel le diol aliphatique est sélectionné parmi le 1,4-butanediol, le méthylpmpanediol, le 1,3-propanediol ou l'éthanediol.

7. Mélange de polyols selon l'une quelconque des revendications 1 à 6, dans lequel le polymère polyol est présent en quantité allant de 58 à 77 parties en poids, le polyol est présent en quantité allant de 19 à 38 parties en poids et le prolongateur de chaîne est présent en quantité allant de 2 à 8 parties en poids, chacun pour 100 parties du mélange de polyols.

8. Composition comprenant un mélange de polyols selon l'une quelconque des revendications 1 à 8 et un surfactant au silicium du type de ceux employés dans la production de mousses de polyuréthane classiques.

9. Composition selon la revendication 8, dans laquelle le surfactant est présent en quantité allant de 0,06 à 0,15 parties en poids pour 100 parties du mélange de polyols.

10. Mousse de polyuréthane à haute résilience comprenant le produit de la réaction d'une composition selon la revendication 8 ou la revendication 9 et d'un diisocyanate de toluène modifié.

11. Mousse de polyuréthane à haute résilience selon la revendication 10, dans laquelle le mélange formant la mousse inclut en plus un surfactant au silicium du type de ceux utilisés pour la production de mousses à haute résilience.

12. Mousse de polyuréthane à haute résilience réalisable en faisant réagir le mélange de polyols selon l'une quelconque des revendications 1 à 8 avec un diisocyanate de toluène modifié, laquelle mousse de polyuréthane à haute résilience ayant une valeur RA selon la nonne ISO 4287/1 de moins de 35 µm mesurée à l'aide d'une machine PERTHOMETER S8P.

13. Mousse de polyuréthane à haute résilience selon la revendication 12, ayant une valeur RA et une valeur RZ selon la norme ISO 4287/1 de respectivement moins de 35 µm et moins de 150 µm, mesurées à l'aide d'une machine PERTHOMETER S8P.
